# FASCICULE DE BREVET EUROPEEN

(11) **EP 1 422 764 B1**
(45) Date de publication et mention de la délivrance du brevet: **06.04.2011**
(21) Numéro de dépôt: 03292785.7
(22) Date de dépôt: 06.11.2003
(51) Int. Cl.: F02D 41/20, H01L 41/04

(54) **Dispositif de commande d'un actuateur piézo-électrique ultrasonore et procédé de mise en oeuvre**
Steuervorrichtung für einen piezoelektrischen Ultraschallaktuator und Betriebsverfahren
Control device for a piezoelectric ultrasonic actuator and method of operation

(30) Priorité: 22.11.2002 FR 0214665
(43) Date de publication de la demande: 26.05.2004
(73) Titulaire: RENAULT S.A.S., 92100 Boulogne Billancourt (FR)
(72) Inventeur: Ripoll, Christophe, 78220 Viroflay (FR); Agneray, André, 92100 Boulogne (FR)
(74) Mandataire: Cémeli, Eric Philippe Laurent

(56) Documents cités:
- DE-A1- 10 151 421
- DE-A1- 19 709 715
- DE-A1- 19 714 610

## Description

La présente invention concerne un dispositif de commande d'un actuateur piézo-électrique ultrasonore piloté électriquement, et plus particulièrement d'un injecteur de carburant à étage piézo-électrique piloté par le calculateur d'injection électrique d'un moteur à combustion interne dans un véhicule automobile. Elle concerne de plus un procédé de mise en oeuvre du dispositif.

Plus précisément, le problème que vise à résoudre l'invention est l'excitation des cellules piézo-électriques pour faire vibrer la structure d'un injecteur ultrasonore, telle que décrite dans la demande de brevet français, déposée sous le numéro 99 14548 au nom de la Demanderesse. Ce type d'injecteur pulvérise très finement le carburant en gouttelettes calibrées pour assurer un dosage précis et suffisamment petites pour assurer la vaporisation complète et homogène du carburant injecté. Un tel injecteur ultrasonore comporte entre autres une buse cylindrique alimentée en carburant et à l'extrémité de laquelle est ménagé un orifice d'injection, et des moyens de mise en vibration cyclique de la buse, tel un transducteur, comportant un étage en céramique piézo-électrique aux bornes de laquelle on fait varier la tension électrique pour modifier son épaisseur entre deux positions extrêmes correspondant à l'ouverture et à la fermeture de l'injecteur, à un rapport de démultiplication près. Une céramique piézo-électrique d'injecteur est équivalente au premier ordre à une capacité dont la tension de chargement est élevée, supérieure à une centaine de volts.

Dans un véhicule automobile, la tension d'alimentation a pour valeur 12 ou 42 volts, ce qui implique d'augmenter cette tension pour assurer la charge et la décharge de la céramique.

Il existe actuellement un premier groupe de topologies de dispositif de commande pour injecteurs piézo-électriques comprenant deux circuits séparés, l'un étant un convertisseur-élévateur de tension en courant continu DC-DC alimenté par la basse tension de la batterie et l'autre étant une structure de chargement et de déchargement de la céramique.

Un deuxième groupe concerne les topologies regroupant dans un même circuit le convertisseur-élévateur de tension et la structure de chargement et de déchargement de la céramique, comme le décrit la demande de brevet américain publiée sous le N°. US 5 986 360, au nom de SIEMENS. Une telle topologie permet d'utiliser des composants communs pour les deux fonctions, ce qui réduit le coût global du dispositif.

Les topologies à transformateur ont pour inconvénients d'être chères à réaliser et de présenter un couplage de la résonance électrique avec la résonance magnétique.

Le but de l'invention est de proposer une nouvelle topologie sans transformateur, donc sans isolation galvanique, avec un découplage des deux résonances.

Pour cela, un premier objet de l'invention est un dispositif de commande d'au moins un actuateur piézo-électrique ultrasonore, piloté électroniquement à partir d'un calculateur de contrôle et d'une source de tension continue selon la revendication 1, comportant:
- un premier étage, alimenté par la source de tension continue, d'amplification de ladite tension pour générer une haute tension ;
- un deuxième étage, alimenté par la haute tension générée par le premier étage, de génération d'une source de courant pour alimenter les injecteurs ;
- d'un troisième étage de sélection des injecteurs piézo-électriques à piloter ;
- un quatrième étage de pilotage de la tension d'excitation Vₚᵢ des injecteurs.

Selon l'invention, le deuxième étage de génération d'une source de courant pour alimenter les injecteurs piézo-électriques est constitué par une branche comprenant une seconde inductance L₂ reliée à un interrupteur de découpage monté en anti-parallèle avec une diode d₂ de roue libre, ladite inductance L₂ de valeur déterminée pour réaliser un circuit oscillant avec chaque injecteur piloté étant reliée d'un côté au point de jonction J₂ de la diode D avec la capacité de filtrage C du premier étage et de l'autre côté à une borne de l'interrupteur S₂ dont l'autre borne est connectée à la borne (-) de la source de tension B.

Un second objet de l'invention est un procédé de mise en oeuvre du dispositif de commande d'au moins un actuateur piézo-électrique ultrasonore mentionné ci-dessus, caractérisé en ce qu'il comporte une séquence de sélection d'un actuateur Pᵢ donné, par pilotage de la fermeture des moyens de sélection reliés audit actuateur par le calculateur de contrôle et en ce qu'il comporte également au moins une séquence d'alimentation en haute tension alternative de l'actuateur piézo-électrique sélectionné comportant :
- dans une première phase de charge de l'inductance L₂ du deuxième étage du dispositif, la fermeture de l'interrupteur S₂ de découpage par le calculateur de contrôle 1 de telle sorte que l'énergie provenant de la haute tension Vₐ s'accumule dans l'inductance L₂ par circulation d'un courant i₂ dans la boucle constituée de la capacité C de filtrage, l'inductance L₂ et de l'interrupteur S₂; et dans une seconde phase d'oscillation entre l'actuateur et l'inductance L₂, l'ouverture dudit interrupteur S₂ de découpage par le calculateur de contrôle 1, la diode d₂ en anti-parallèle non passante obligeant le courant i₂ à circuler dans l'actuateur Pᵢ dans un sens puis dans l'autre en raison de la résonance électrique entre l'inductance L₂ et l'injecteur Pᵢ ;
et au moins une séquence de décharge de l'inductance L₂, alors que la tension Vₚᵢ aux bornes de l'actuateur Pᵢ est nulle, l'interrupteur S₂ étant toujours ouvert, provoquant un transfert d'énergie de l'inductance L₂ vers la capacité de filtrage C créant un courant (i₂) négatif dans la boucle comprenant l'inductance L₂, la capacité de filtrage C et la diode en anti-parallèle d₂.

D'autres caractéristiques et avantages de l'invention apparaîtront à la lecture de la description de deux variantes de réalisation d'un dispositif de commande d'un actuateur piézo-électrique, illustrée par les figures suivantes qui sont :
- les figures 1 et 2 : deux variantes de la partie commande des injecteurs d'un dispositif de commande selon l'invention ;
- les figures 3a à 3c : les schémas équivalents au circuit de charge de l'injecteur piézo-électrique ;
- la figure 4 : un schéma équivalent au circuit de décharge de l'injecteur piézo-électrique ;
- les figures 5a à 5b : les représentations temporelles du courant dans l'inductance de charge et de la tension aux bornes de l'injecteur ;
- la figure 6 : un schéma électronique complet d'un dispositif de commande de plusieurs actuateurs piézo-électriques avec pilotage de leur tension d'excitation Vₚᵢ selon l'invention ;
- les figures 7a à 7e : les variations temporelles des signaux aux bornes des différents éléments du dispositif de commande selon le procédé de pilotage de l'invention ;
- les figures 8a à 8e : les variations temporelles des signaux aux bornes des différents éléments du dispositif de commande selon une première variante de pilotage, selon l'invention ;
- les figures 9a à 9e : les variations temporelles des signaux aux bornes des différents éléments du dispositif de commande selon une deuxième variante de pilotage, selon l'invention ;
- la figure 10 un schéma électronique des moyens de commande à la fermeture de l'interrupteur de découpage du second étage du dispositif selon l'invention.

Les éléments portant les mêmes références sur les différentes figures remplissent les mêmes fonctions en vue des mêmes résultats.

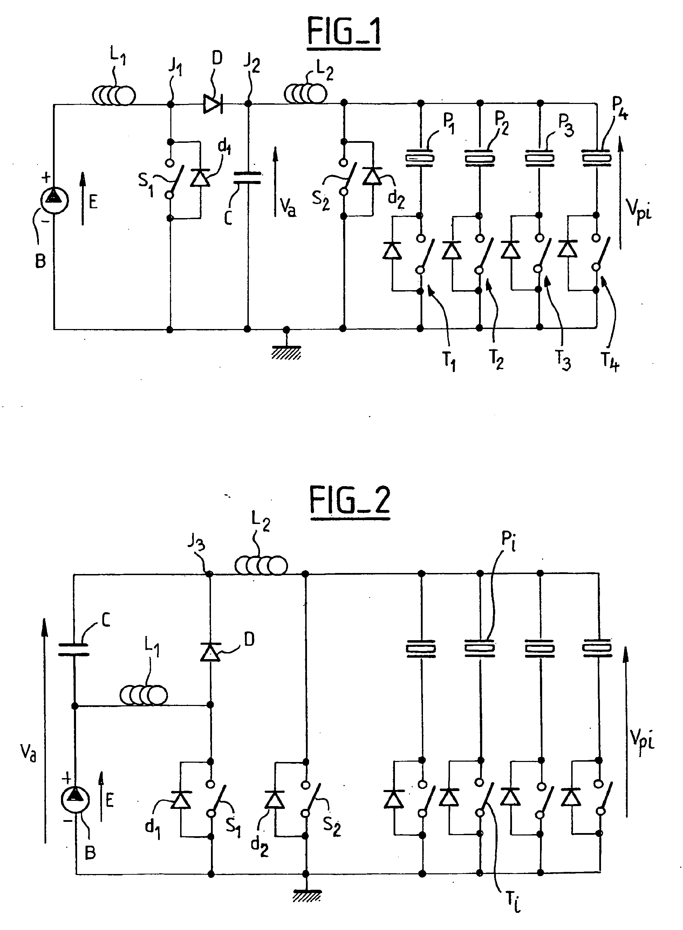

Comme le montre le schéma de la figure 1, le dispositif de commande d'un actuateur piézo-électrique Pᵢ selon l'invention est alimenté par une source B de tension continue, telle qu'une batterie électrique du véhicule, dont la borne (-) est reliée à la masse et dont la borne (+) est reliée à un premier étage d'amplification de ladite tension continue E.

Comme un moteur thermique de véhicule automobile nécessite plusieurs injecteurs Pᵢ, i entier variant de 1 à n, le schéma représente plusieurs céramiques piézo-électriques P₁, ...Pᵢ,...Pₙ qui sont montées en parallèle et choisies successivement grâce à l'interrupteur Tᵢ de sélection monté en série avec chacune d'elles. En fonction de l'injecteur piézo-électrique qui doit être ouvert pendant les intervalles d'activité pour assurer l'alimentation en carburant du cylindre correspondant, l'interrupteur Tᵢ est commandé par un signal logique en provenance du calculateur d'injection, pour que la sortie haute tension du convertisseur-élévateur soit connectée précisément aux bornes des céramiques de cet injecteur.

Le dispositif de commande comporte :
- un premier étage d'amplification de la tension continue E d'alimentation pour générer une haute tension Vₐ ;
- un deuxième étage de génération d'une source de courant i₂ pour alimenter les injecteurs Pᵢ et qui est alimenté par la haute tension Vₐ générée par le premier étage ;
- un troisième étage de sélection des injecteurs piézo-électriques à piloter ;
- un quatrième étage de pilotage de la tension d'excitation Vₚᵢ des injecteurs, qui n'est pas représenté sur la figure 1.

Le premier étage de génération d'une haute tension par amplification de la tension continue d'alimentation est constitué par une première branche comprenant une première inductance L₁ reliée à un interrupteur S₁ de découpage. Cet interrupteur peut être par exemple un transistor MOS, ou bien bipolaire à grille isolée - IGBT - avec une diode d₁ montée en anti-parallèle. Cette diode d₁ de roue libre est montée en anti-parallèle avec l'interrupteur S₁, dans le sens passant du courant de décharge de l'injecteur Pᵢ sélectionné pour être piloté. L'inductance L₁ est reliée d'un côté à la borne (+) de la source de tension B et de l'autre côté à une borne de l'interrupteur S₁ dont l'autre borne est reliée à la borne (-) de la source de tension B.

Une deuxième branche est montée selon une première variante de réalisation, en parallèle sur l'interrupteur S₁ de découpage et comprend une diode D de redressement reliée à une capacité C de filtrage. Ainsi, une des bornes de ladite diode D est reliée au point de jonction J₁ de l'inductance L₁ et de l'autre interrupteur S₁ et son autre borne est reliée à une première borne de la capacité C dont la deuxième borne est reliée à la borne (-) de la source de tension.

Le premier étage d'amplification de la tension batterie E délivre une haute tension Vₐ aux bornes de la capacité de filtrage C, qui alimente un deuxième étage constitué d'une branche montée entre les bornes de ladite capacité de filtrage C et comprenant une deuxième inductance L₂ reliée à un deuxième interrupteur de découpage S₂, avec une diode d₂ de roue libre montée en anti-parallèle.

Une des bornes de l'inductance L₂ est reliée au point de jonction J₂ de la diode D avec la capacité C et son autre borne est reliée au transistor S₂. L'inductance L₂ est déterminée de façon à réaliser un circuit oscillant avec chaque injecteur piloté, auquel elle délivre un courant i₂ d'alimentation.

Le dispositif de commande comporte enfin un étage de sélection de l'injecteur piézo-électrique Pᵢ à piloter parmi l'ensemble de N injecteurs. Comme cela a été décrit auparavant, ces N injecteurs montés en parallèle sont reliés chacun à un interrupteur Tᵢ commandable par le calculateur d'injection du véhicule.

Selon une deuxième variante de réalisation représentée sur la figure 2, la deuxième branche du premier étage de génération d'une haute tension d'alimentation Vₐ est montée en parallèle sur l'inductance L₁ et comprend une capacité de filtrage C en série avec une diode D, pour délivrer une haute tension Vₐ entre la borne (-) de la source de tension continue B et le point de jonction J₃ de la capacité C avec la diode D.

Le fonctionnement du dispositif de commande se décompose en au moins trois séquences, une séquence de sélection d'un actuateur piézo-électrique Pᵢ par l'interrupteur Tᵢ, une séquence d'alimentation en tension alternative de l'actuateur sélectionné, auxquelles s'ajoute une séquence de pilotage électronique de la tension d'excitation Vₚᵢ des injecteurs Pᵢ par régulation de la haute tension Vₐ générée par le premier étage du dispositif de commande.

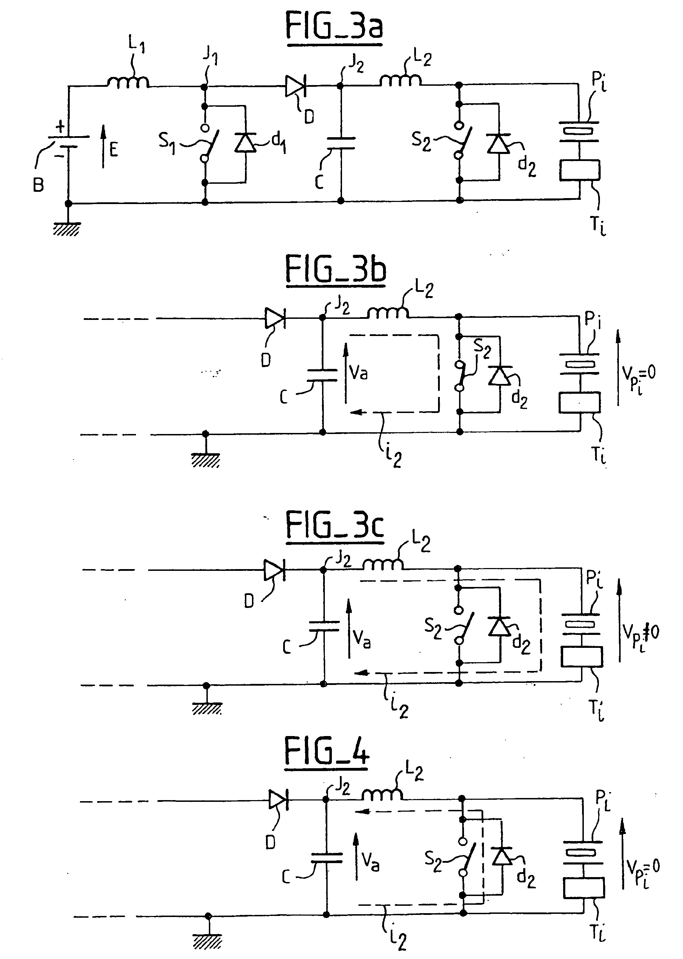

Selon la figure 3a, qui est un schéma équivalent au circuit d'alimentation en haute tension alternative de l'injecteur piézo-électrique Pᵢ, le calculateur envoie un signal de commande pour piloter la fermeture de l'interrupteur de sélection Tᵢ, afin que l'actuateur piézo-électrique puisse être alimenté par cette tension alternative. Comme le montre la figure 3b, lors d'une première phase de la séquence d'alimentation de l'injecteur, le signal de commande pilote la fermeture de l'interrupteur S₂ de découpage de telle sorte que l'énergie provenant de la haute tension Vₐ s'accumule dans l'inductance L₂ par circulation d'un courant i₂ dans la boucle constituée de la capacité C de filtrage, de l'inductance L₂ et de l'interrupteur S₂. Lors d'une seconde phase d'oscillation entre la capacité de l'injecteur et l'inductance L₂ , représentée sur la figure 3c, l'interrupteur S₂ de découpage est commandé à l'ouverture, le courant i₂ ne pouvant passer par la diode d₂ en anti-parallèle non passante est obligé de circuler dans l'actuateur Pᵢ dans un sens puis dans l'autre car l'inductance L₂ et l'injecteur Pᵢ sont en résonance électrique. La valeur de l'inductance L₂ étant fonction de la résonance d'excitation acoustique de l'actuateur piézo-électrique, elle est déterminée pour que l'inductance L₂ ait le temps de se charger suffisamment dans la première phase de telle sorte que la tension d'excitation Vₚᵢ aux bornes de l'injecteur Pᵢ, voisine de 1200 volts, soit atteinte. De plus, la capacité C de filtrage est dimensionnée pour avoir une réactivité très forte à la montée en tension Vₐ.

Puis, la tension Vₚᵢ aux bornes de l'injecteur étant toujours nulle, l'inductance L₂ se décharge par transfert d'énergie de l'inductance L₂ vers la capacité de filtrage C, créant un courant i₂ négatif dans la boucle comprenant l'inductance L₂, la capacité de filtrage C et la diode en anti-parallèle d₂. La figure 4 est un schéma équivalent au circuit de décharge de l'inductance L₂ .

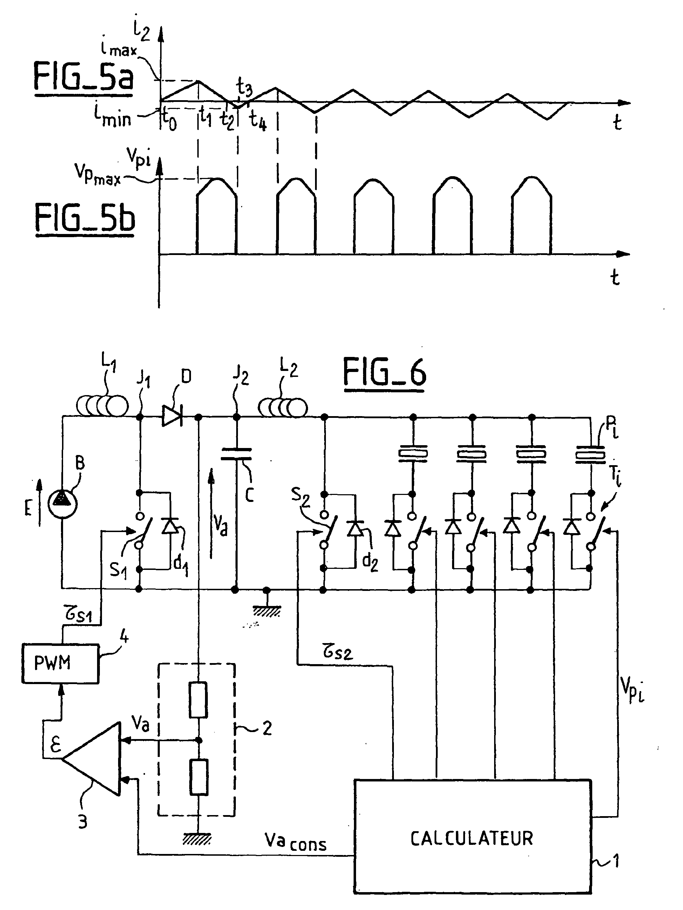

Comme le montrent les figures 5a et 5b, qui sont les représentations temporelles du courant i₂ dans l'inductance L₂ et de la tension Vₚᵢ aux bornes de l'injecteur Pᵢ, pour une haute tension d'alimentation Vₐ constante, la première phase de la séquence d'alimentation de l'injecteur, correspondant à l'accumulation d'énergie dans l'inductance L₂, a lieu entre les instants t0 et t1 quand le courant i₂ dans l'inductance L₂ croît de 0 à une valeur maximale iₘₐₓ . La deuxième phase de la séquence a lieu entre les instants t1 et t3 : tout d'abord entre les instants t1 et t2 quand le courant i₂ décroît de iₘₐₓ à 0 pendant que la tension Vₚᵢ croît de 0 à une valeur maximale Vₚₘₐₓ, voisine de 1200 Volts, ce qui correspond à la charge de l'injecteur, et ensuite entre les instants t2 et t3 de 0 à une valeur minimale négative iₘᵢₙ pendant que la tension Vₚᵢ décroît de la valeur maximale Vₚₘₐₓ à 0, et qui correspond à sa décharge. Au cours de la phase de décharge de l'inductance L₂ entre les instants t3 et t4, la tension Vₚᵢ reste nulle et le courant i₂ croît à nouveau de la valeur minimale iₘᵢₙ jusqu'à 0. Entre ces instants t1 et t4, l'actuateur piézo-électrique est en résonance électrique avec l'inductance L₂.

La période de résonance électrique entre l'actuateur piézo-électrique et l'inductance L₂ correspondant à la deuxième phase de la séquence d'alimentation de l'actuateur, entre les instants t1 et t3, est plus courte que la période de résonance acoustique correspondant aux trois phases réunies entre les instants t1 à t4. Cette résonance acoustique dépend des caractéristiques de l'injecteur piézo-électrique. La phase proprement dite d'alimentation en haute tension alternative de l'injecteur Pᵢ entre les instants t1 et t3, dépend de la valeur de l'inductance L₂, de la haute tension Vₐ à atteindre et du temps de fermeture de l'interrupteur I₂ pour obtenir la tension Vₚᵢ nécessaire.

La tension Vₚᵢ aux bornes d'un injecteur sélectionné Pᵢ a la forme d'une impulsion sinusoïdale lorsque l'interrupteur S₂ de découpage du deuxième étage du dispositif de commande est commandé à l'ouverture, entre t1 et t3. Cette tension d'excitation Vₚᵢ d'un injecteur piézo-électrique dépend des paramètres suivants :
- la tension continue E d'entrée du dispositif de commande,
- les angles de conduction ou rapports cycliques d'ouverture des deux interrupteurs S₁ et S₂ de découpage respectivement du premier étage de génération d'une haute tension Vₐ et du deuxième étage de génération d'un courant d'alimentation des injecteurs,
- les caractéristiques des inductances L₁ et L₂ de ces deux étages ainsi que la capacité de charge des injecteurs,
- la consigne de la tension d'excitation.

Pour piloter cette tension d'excitation Vₚᵢ d'un injecteur, il faut contrôler les angles de conduction des deux interrupteurs de découpage S₁ et S₂. Comme cela a été mentionné précédemment, le dispositif de commande comporte un quatrième étage de pilotage de cette tension d'excitation Vₚᵢ qui va agir de la façon suivante : l'interrupteur S₂ du deuxième étage est commandé pour qu'à sa fermeture, l'inductance L₂ se charge durant un certain temps, et qu'à son ouverture, la tension aux bornes de l'injecteur sélectionné décrive une impulsion sinusoïdale. La valeur crête de cette tension Vₚᵢ dépend de l'énergie emmagasinée dans l'inductance L₂ et de la haute tension Vₐ générée.

La figure 6 est un schéma électronique complet d'un dispositif de commande de plusieurs actuateurs piézo-électriques Pᵢ avec pilotage de leur tension d'excitation Vₚᵢ.

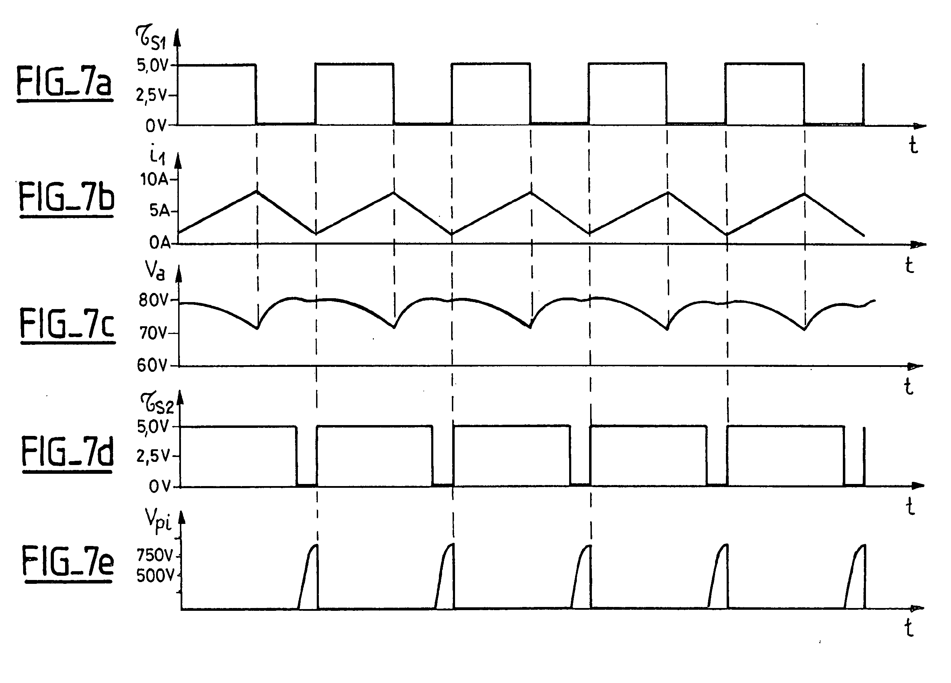

Le procédé de pilotage, grâce à un calculateur électronique de contrôle, qui peut être celui de l'injection, fixe d'une part le rapport cyclique τ_{S1} , ou angle de conduction, de l'interrupteur S₁ de découpage du premier étage à une valeur constante (figure 7a) pour que le courant i₁ circulant dans l'inductance L₁ (figure 7b) génère une haute tension Vₐ en sortie du premier étage qui soit relativement constante (figure 7c) et d'autre part le rapport cyclique τ_{S2}, ou angle de conduction, de l'interrupteur S₂ de découpage du deuxième étage (figure 7d), ce qui permet d'obtenir une tension d'excitation Vₚᵢ des injecteurs dont la forme d'onde est représentée sur la figure 7e.

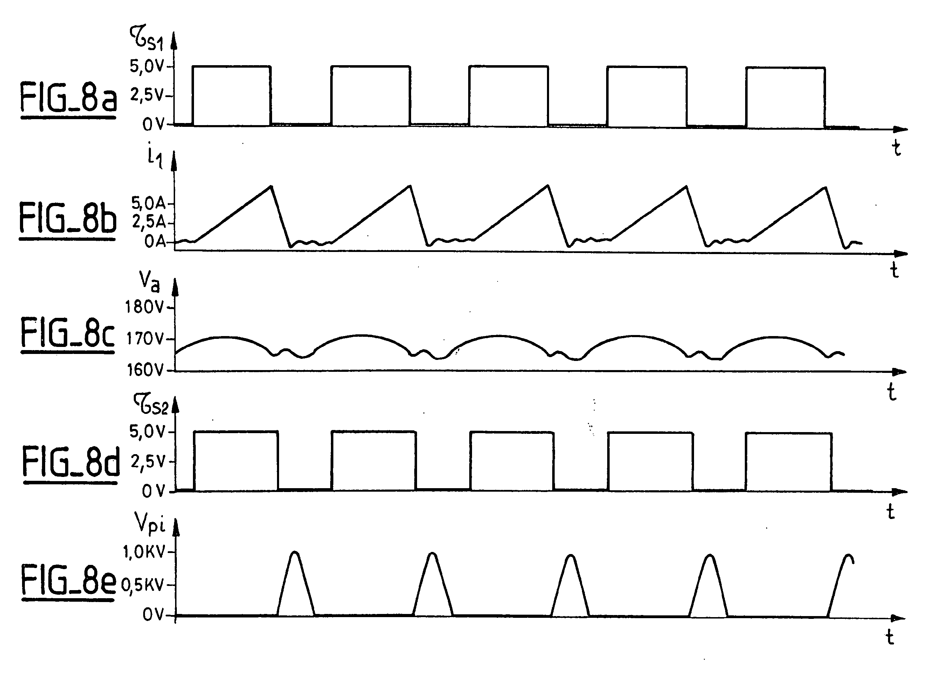

Selon une première variante, ledit procédé de pilotage fait varier, par rapport aux précédentes valeurs fixées, le rapport cyclique τ_{S2} de l'interrupteur S₂ de découpage du deuxième étage (figure 8d), en maintenant constant le rapport cyclique τ_{S1} de l'interrupteur S₁ du premier étage (figure 8a), de façon à faire varier l'énergie emmagasinée dans l'inductance L₂, donc la tension d'excitation Vₚᵢ des injecteurs (figure 8e). On constate une variation du courant i₁ circulant dans l'inductance L₁ (figure 8b) donc de la haute tension Vₐ (figure 8c) car la charge du premier étage n'est plus la même.

Selon une seconde variante, le calculateur électronique d'une part fixe le rapport cyclique, ou angle de conduction, de l'interrupteur de découpage du deuxième étage S₂ à une valeur constante et d'autre part fait varier le rapport cyclique, ou angle de conduction, de l'interrupteur de découpage du premier étage S₁ pour que la haute tension Vₐ en sortie du premier étage soit réglable et constitue le paramètre de pilotage de la tension Vₚᵢ d'excitation des injecteurs.

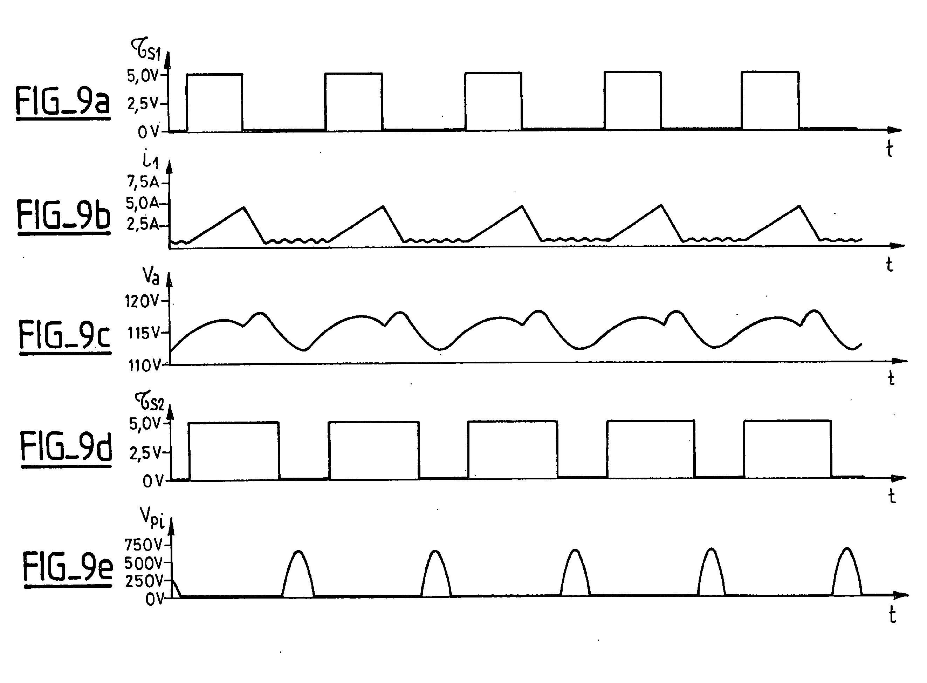

Comme le montrent les figures 9a à 9e successivement représentant les variations temporelles des signaux aux bornes des différents éléments du dispositif correspondant à cette seconde variante, le rapport cyclique *τ*_{*S*1} du premier interrupteur de découpage S₁, qui est égal au temps de conduction t_{c} divisé par la période T du signal, varie par rapport à la première variante selon la commande du calculateur électronique (figure 9a), ce qui entraîne une variation du courant i₁ dans l'inductance L₁ du premier étage du dispositif de commande (figure 9b) et par conséquent une variation dans le même sens de la haute tension Vₐ aux bornes de la capacité C qui se charge grâce à l'énergie emmagasinée dans ladite inductance L₁ (figure 9c). Par contre, le rapport cyclique τ_{*S*2} du deuxième interrupteur de découpage S₂ est constant par rapport à la première variante (figure 9d) de sorte que la tension d'excitation Vₚᵢ est un signal périodique de même forme d'onde et dont la valeur crête varie en fonction de la valeur de la haute tension Vₐ (figure 9e).

La consigne en tension d'excitation Vₚᵢ , déterminée par la prestation en injection souhaitée par le système d'injection, peut être traduite en une consigne en haute tension Vₐ que doit suivre la tension en sortie du second étage du dispositif de commande. Pour cela, la tension en sortie du second étage est mesurée et comparée à la consigne dans une boucle de régulation destinée à réduire l'écart entre ces deux valeurs.

Comme le montre le schéma complet du dispositif de commande, les moyens de pilotage de cette consigne de tension d'excitation Vₚᵢ comprennent un calculateur électronique 1 de contrôle, pouvant être celui de l'injection, qui transforme cette consigne de tension d'excitation en consigne de haute tension V_{acons}, à laquelle va être comparée la haute tension Vₐ mesurée par un capteur 2, qui est ainsi régulée par un régulateur 3 de type Proportionnel Intégral Dérivé par exemple. L'écart ε entre la valeur mesurée et la valeur de consigne est transformé en signal de commande d'ouverture τ_{*S*1} de l'interrupteur de découpage S₁, par un générateur 4 d'impulsions à largeur variable (PWM) qui va permettre de réaliser la haute tension Vₐ nécessaire à l'obtention de la tension d'excitation.

Cette haute tension Vₐ nécessaire à l'obtention de la tension d'excitation Vₚᵢ peut également être obtenue par calibration en fonction des injecteurs utilisés.

Le pilotage de la tension d'excitation Vₚᵢ des injecteurs est simple à mettre en oeuvre car seule la haute tension d'alimentation Vₐ est le paramètre servant à la contrôler. De plus la régulation de la tension d'excitation Vₚᵢ par le contrôle de la haute tension Vₐ permet de dimensionner l'électronique de puissance de manière très réactive et donc de dimensionner la capacité de filtrage C comme les composants de puissance, soit les interrupteurs S₁ et S₂, à leur minimum de taille.

Selon une autre caractéristique du procédé de mise en oeuvre du dispositif de commande d'un injecteur piézo-électrique ultrasonore, il comporte une étape supplémentaire de commande à la fermeture de l'interrupteur de découpage S₂ du second étage de génération d'une source de courant d'alimentation des injecteurs, quand la tension à ses bornes est nulle, c'est-à-dire quand la tension d'excitation Vₚᵢ de l'injecteur piloté est nulle. Pour cela, on peut mesurer la tension U₂ₘₑₛ entre son collecteur et son émetteur et n'autoriser sa fermeture que si sa valeur est inférieure à un seuil voisin de zéro.

Cette étape de commande à la fermeture peut être réalisée entièrement par des moyens de commande logiques, par machine d'état par exemple assurant la commande en tension lorsque la tension aux bornes de l'interrupteur S₂ est quasi nulle.

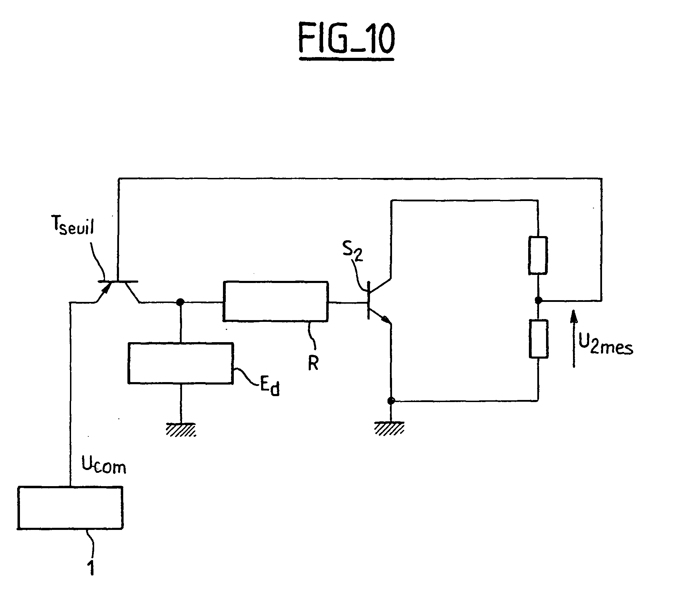

Elle peut également être réalisée par des moyens analogiques de commande, représentés sur le schéma électronique de la figure 10, tels qu'un transistor Tₛₑᵤᵢₗ , de type PNP si l'interrupteur S₂ est un transistor de type NPN, recevant un signal de commande U_{com} du calculateur de contrôle 1 sur son émetteur et dont la base reçoit la tension existant aux bornes de l'interrupteur S₂. Si l'écart entre la tension de commande et la tension mesurée U_{com} - U₂ₘₑₛ, est inférieur à un seuil, déterminé en fonction des caractéristiques des transistors, le transistor Tₛₑᵤᵢₗ conduit et laisse passer le signal de commande de fermeture par son collecteur qui est relié à la base de l'interrupteur S₂, par l'intermédiaire d'une résistance R par exemple. Un étage de décharge E_{d} du transistor Tₛₑᵤᵢₗ est prévu entre son collecteur et sa masse dans le cas où la fermeture de l'interrupteur S₂ n'est pas autorisée.

L'intérêt de commander à la fermeture l'interrupteur du second étage du dispositif lorsque la tension d'excitation Vₚᵢ des injecteurs est proche de zéro est de limiter les pertes par commutation dans les interrupteurs, quelque soit les variations dans le temps de la période du signal d'excitation des injecteurs. Il est ainsi possible d'assurer la commande à la fermeture quelque soit la variation des paramètres de l'électronique - tolérance des composants, de l'impédance d'entrée des injecteurs, variations des tensions d'alimentation ou des commandes intermédiaires comme la durée de chargement des inductances, la précision du pilotage de la haute tension d'alimentation Va,... - ou des dérives dans le temps de ces composants ou des dérives liées à la température ambiante, qui peut varier de -40°C à +150°C.

Les avantages de ce dispositif de commande d'un injecteur piézo-électrique ultrasonore sont dus à sa nouvelle topologie sans transformateur, donc sans isolation galvanique, qui permet la génération d'une forme d'onde sinusoïdale aux bornes de chaque injecteur sélectionné, avec un minimum de deux interrupteurs de découpage. Elle permet également de réduire le coût des composants pour réaliser la fonction recherchée par l'utilisation d'inductances de faible valeur, qui peuvent être à air ou à matériau magnétique.

## Revendications

1. Dispositif de commande d'au moins un actuateur piézo-électrique ultrasonore, piloté électroniquement à partir d'un calculateur de contrôle et d'une source de tension continue, comportant :
- un premier étage, alimenté par la source de tension continue, d'amplification de ladite tension pour générer une haute tension ;
- un deuxième étage, alimenté par la haute tension générée par le premier étage, de génération d'une source de courant pour alimenter des injecteurs ;
- d'un troisième étage de sélection des injecteurs piézo-électriques à piloter ;
- un quatrième étage de pilotage de la tension d'excitation des injecteurs ;
**caractérisé en ce que** le deuxième étage de génération d'une source de courant (i₂) pour alimenter les injecteurs piézo-électriques est constitué par une branche comprenant une seconde inductance (L₂) reliée à un interrupteur de découpage monté en anti-parallèle avec une diode (d₂) de roue libre, ladite inductance (L₂) de valeur déterminée pour réaliser un circuit oscillant avec chaque injecteur piloté étant reliée d'un côté au point de jonction (J₂) d'une diode (D) avec une capacité de filtrage (C) du premier étage et de l'autre côté à une borne de l'interrupteur (S₂) dont l'autre borne est connectée à la borne (-) de la source de tension (B).

2. Dispositif de commande selon la revendication 1, **caractérisé en ce que** la valeur de l'inductance (L₂) du second étage de génération d'une source de courant (i₂) pour alimenter les injecteurs piézo-électriques est fonction de la résonance d'excitation acoustique des actuateurs piézo-électriques, et est déterminée pour que l'inductance (L₂) ait le temps de se charger suffisamment dans une première phase de telle sorte que la tension d'excitation (Vₚᵢ) aux bornes de l'injecteur Pᵢ, voisine de 1200 volts, soit atteinte.

3. Dispositif de commande selon l'une des revendications 1 ou 2, **caractérisé en ce que** le premier étage de génération d'une haute tension (Vₐ) est constitué par :
- une première branche comprenant une première inductance (Lᵢ) reliée à un interrupteur (S₁) de découpage, monté en anti-parallèle avec une diode (d₁) de roue libre, ladite inductance (L₁) étant un côté reliée à la borne (+) de la source de tension continue (B) et de l'autre côté à une borne de l'interrupteur (S₁) dont l'autre borne est connectée à la borne (-) de la source (B) et/ou à la masse ;
- une deuxième branche montée en parallèle sur l'interrupteur (S₁) de découpage et comprenant une diode (D) reliée à une capacité de filtrage (C), une des bornes de ladite diode (D) étant reliée au point de jonction (J₁) de l'inductance (L₁) et de l'interrupteur (S₁) de la première branche, la haute tension d'alimentation étant délivrée aux bornes de la capacité (C).

4. Dispositif de commande selon l'une des revendications 1 ou 2, **caractérisé en ce que** le premier étage de génération d'une haute tension d'alimentation (Vₐ) est constitué par :
- une première branche comprenant une première inductance (L₁) reliée à un interrupteur (S₁) de découpage, monté en anti-parallèle avec une diode (d₁) de roue libre, ladite inductance (L₁) étant un côté reliée à la borne (+) de la source de tension continue (B) et de l'autre côté à une borne de l'interrupteur (S₁) dont l'autre borne est connectée à la borne (-) de la source (B) et/ou à la masse ;
- une deuxième branche montée en parallèle sur l'inductance (L₁) et comprenant une capacité de filtrage (C) en série avec une diode (D), la haute tension d'alimentation (Vₐ) étant délivrée entre la borne (-) de la source de tension (B) et le point de jonction (J₃) de la capacité (C) avec la diode (D).

5. Dispositif de commande selon les revendications 1 à 4, **caractérisé en ce que** le quatrième étage de pilotage de la tension d'excitation (Vₚᵢ) des injecteurs est constitué par le calculateur électronique (1) de contrôle, qui transforme cette consigne de tension d'excitation en consigne de haute tension (Vₐ), à laquelle va être comparée la haute tension (Vₐ) mesurée par un capteur (2), qui est ainsi régulée par un régulateur (3) de type Proportionnel Intégral Dérivé, l'écart (ε) entre la valeur mesurée et la valeur de consigne étant transformé en signal de commande d'ouverture (τₛ₁) de l'interrupteur de découpage (S₁), qui va permettre de réaliser la haute tension Vₐ nécessaire à l'obtention de la tension d'excitation.

6. Dispositif de commande selon les revendications 1 à 4, **caractérisé en ce que** le quatrième étage de pilotage de la tension d'excitation (Vₚ₁) des injecteurs est constitué par le calculateur électronique (1) de contrôle, qui transforme cette consigne de tension d'excitation en consigne de haute tension (Vₐ), obtenue par calibration en fonction des injecteurs utilisés.

7. Procédé de mise en oeuvre du dispositif de commande d'au moins un actuateur piézo-électrique ultrasonore selon les revendications 1 à 6, **caractérisé en ce qu'**il comporte une séquence de sélection d'un actuateur (Pᵢ) donné, par pilotage de la fermeture des moyens de sélection reliés audit actuateur par le calculateur de contrôle et **en ce qu'**il comporte également au moins une séquence d'alimentation en haute tension alternative de l'actuateur sélectionné comportant :
- dans une première phase de charge de l'inductance (L₂) du deuxième étage du dispositif, la fermeture de l'interrupteur (S₂) de découpage par le calculateur de contrôle (1) de telle sorte que l'énergie provenant de la haute tension (Vₐ) s'accumule dans l'inductance (L₂) par circulation d'un courant (i₂) dans la boucle constituée de la capacité (C) de filtrage, l'inductance (L₂) et de l'interrupteur (S₂) ;
- et dans une seconde phase d'oscillation entre l'actuateur et l'inductance (L2), l'ouverture dudit interrupteur (S₂) de découpage par le calculateur de contrôle (1), la diode (d₂) en anti-parallèle non passante obligeant le courant (i₂) à circuler dans l'actuateur (Pᵢ) dans un sens puis dans l'autre en raison de la résonance électrique entre l'inductance (L₂) et l'injecteur (P₁) ;
et au moins une séquence de décharge de l'inductance (L2), alors que la tension (Vₚᵢ) à ses bornes est nulle, provoquant un transfert d'énergie de l'injecteur vers l'inductance (L₂) créant un courant (i₂) négatif dans la boucle comprenant l'inductance (L₂), la capacité de filtrage (C) et la diode en anti-parallèle (d₂).

8. Procédé de mise en oeuvre selon la revendication 7, **caractérisé en ce qu'**il comporte de plus une séquence de pilotage de la tension d'excitation (Vₚᵢ) aux bornes des injecteurs (Pᵢ), par le calculateur électronique de contrôle (1) qui d'une part fixe le rapport cyclique, ou angle de conduction, de l'interrupteur (S₁) de découpage du premier étage à une valeur constante pour que la haute tension (Vₐ) en sortie du premier étage soit elle-même constante et d'autre part fait varier le rapport cyclique, ou angle de conduction, de l'interrupteur (S₂) de découpage du deuxième étage, ce qui fait varier l'énergie emmagasinée dans l'inductance (L₂) et par conséquent la tension d'excitation des injecteurs.

9. Procédé de mise en oeuvre selon la revendication 7, **caractérisé en ce qu'**il comporte de plus une séquence de pilotage de la tension d'excitation (Vₚᵢ) aux bornes des injecteurs (Pᵢ), par le calculateur électronique de contrôle (1) qui d'une part fixe le rapport cyclique, ou angle de conduction, de l'interrupteur (S₂) de découpage du deuxième étage à une valeur constante et d'autre part fait varier le rapport cyclique, ou angle de conduction, de l'interrupteur de découpage du premier étage (S₁) pour que la haute tension (Vₐ) en sortie du premier étage soit réglable et constitue le paramètre de pilotage de la tension (Vₚᵢ) d'excitation des injecteurs.

10. Procédé de mise en oeuvre selon la revendication 7, **caractérisé en ce qu'**il comporte une étape supplémentaire de commande à la fermeture de l'interrupteur de découpage (S₂) du second étage de génération d'une source de courant d'alimentation des injecteurs, quand la tension mesurée à ses bornes est nulle, c'est-à-dire quand la tension d'excitation (Vₚᵢ) des injecteurs est nulle.

11. Procédé de mise en oeuvre selon la revendication 10, **caractérisé en ce que** l'étape supplémentaire de commande à la fermeture de l'interrupteur de découpage (S₂) du second étage est réalisée par des moyens analogiques de commande, tels qu'un transistor (Tₛₑᵤᵢₗ), de type PNP dans le cas où l'interrupteur (S₂) est un transistor de type NPN, recevant un signal de commande (U_{com}) du calculateur de contrôle (1) sur son émetteur et dont la base reçoit la tension existant aux bornes de l'interrupteur (S₂), de la façon suivante : si l'écart entre la tension de commande et la tension mesurée est inférieur à un seuil déterminé, le transistor (Tₛₑᵤᵢₗ) conduit et laisse passer le signal de commande de fermeture par son collecteur qui est relié à la base de l'interrupteur (S₂), par l'intermédiaire d'une résistance (R).

## Claims

1. Control device for at least one ultrasound piezoelectric actuator, driven electronically with the help of a control computer and of a DC voltage source, comprising:
- a first stage, supplied by the DC voltage source, for amplifying the said voltage so as to generate a high voltage;
- a second stage, supplied by the high voltage generated by the first stage, for generating a current source so as to supply injectors;
- a third stage for selecting the piezoelectric injectors to be driven;
- a fourth stage for driving the excitation voltage of the injectors;
**characterized in that** the second stage for generating a current source (i₂) so as to supply the piezoelectric injectors consists of a branch comprising a second inductor (L₂) linked to a breaker switch arranged in anti-parallel fashion with a free wheel diode (d₂), the said inductor (L₂), of value determined so as to produce an oscillating circuit with each driven injector, being linked on one side to the junction point (J₂) of a diode (D) and a filtering capacitor (C) of the first stage and on the other side to a terminal of the switch (S₂) whose other terminal is connected to the (-) terminal of the voltage source (B).

2. Control device according to Claim 1, **characterized in that** the value of the inductor (L₂) of the second stage for generating a current source (i₂) so as to supply the piezoelectric injectors is dependent on the acoustic excitation resonance of the piezoelectric actuators, and is determined so that the inductor (L₂) has time to charge up sufficiently in a first phase in such a way that the excitation voltage (Vₚᵢ) across the terminals of the injector Pᵢ, of around 1200 volts, is reached.

3. Control device according to one of Claims 1 or 2, **characterized in that** the first stage for generating a high voltage (Vₐ) consists of:
- a first branch comprising a first inductor (L₁) linked to a breaker switch (S₁), arranged in anti-parallel fashion with a free wheel diode (d₁), the said inductor (L₁) being one side linked to the (+) terminal of the DC voltage source (B) and on the other side to a terminal of the switch (S₁) whose other terminal is connected to the (-) terminal of the source (B) and/or to earth;
- a second branch arranged in parallel with the breaker switch (S₁) and comprising a diode (D) linked to a filtering capacitor (C), one of the terminals of the said diode (D) being linked to the junction point (J₁) of the inductor (L₁) and of the switch (S₁) of the first branch, the high supply voltage being delivered across the terminals of the capacitor (C).

4. Control device according to one of Claims 1 or 2, **characterized in that** the first stage for generating a high supply voltage (Vₐ) consists of:
- a first branch comprising a first inductor (L₁) linked to a breaker switch (S₁), arranged in anti-parallel fashion with a free wheel diode (d₁), the said inductor (L₁) being one side linked to the (+) terminal of the DC voltage source (B) and on the other side to a terminal of the switch (S₁) whose other terminal is connected to the (-) terminal of the source (B) and/or to earth;
- a second branch arranged in parallel with the inductor (L₁) and comprising a filtering capacitor (C) in series with a diode (D), the high supply voltage (Vₐ) being delivered between the terminal (-) of the voltage source (B) and the junction point (J₃) of the capacitor (C) and the diode (D).

5. Control device according to Claims 1 to 4, **characterized in that** the fourth stage for driving the excitation voltage (Vₚᵢ) of the injectors consists of the electronic control computer (1), which transforms this excitation voltage setpoint into a high-voltage setpoint (V_{acons}), with which the high voltage (Vₐ) measured by a sensor (2) will be compared, and which is thus regulated by a regulator (3) of Proportional Integral Derivative type, the discrepancy ε) between the measured value and the setpoint value being transformed into an opening control signal (Tₛ₁) for the breaker switch (S₁), which will make it possible to produce the high voltage Vₐ necessary for obtaining the excitation voltage.

6. Control device according to Claims 1 to 4, **characterized in that** the fourth stage for driving the excitation voltage (Vₚᵢ) of the injectors consists of the electronic control computer (1), which transforms this excitation voltage setpoint into a high-voltage setpoint (V_{acons}), obtained by calibration as a function of the injectors used.

7. Method for implementing the control device for at least one ultrasound piezoelectric actuator according to Claims 1 to 6, **characterized in that** it comprises a sequence for selecting a given actuator (Pᵢ), by ordering the closing of the selection means linked to the said actuator by the control computer and **in that** it also comprises at least one sequence of high AC voltage supply of the selected actuator comprising:
- in a first phase of charging of the inductor (L₂) of the second stage of the device, the closing of the breaker switch (S₂) by the control computer (1) in such a way that the energy originating from the high voltage (Vₐ) accumulates in the inductor (L₂) by flow of a current (i₂) in the loop consisting of the filtering capacitor (C), the inductor (L₂) and of the switch (S₂) ;
- and in a second phase of oscillation between the actuator and the inductor (L₂), the opening of the said breaker switch (S₂) by the control computer (1), the non-passing anti-parallel diode (d₂) compelling the current (i₂) to flow in the actuator (Pᵢ) in one direction and then in the other because of the electrical resonance between the inductor (L₂) and the injector (Pᵢ) ;
and at least one sequence of discharging of the inductor (L₂) , whilst the voltage (Vₚᵢ) across its terminals is zero, causing a transfer of energy from the injector to the inductor (L₂) creating a negative current (i₂) in the loop comprising the inductor (L₂), the filtering capacitor (C) and the anti-parallel diode (d₂).

8. Method of implementation according to Claim 7, **characterized in that** it comprises moreover a sequence for driving the excitation voltage (Vₚᵢ) across the terminals of the injectors (Pᵢ), by the electronic control computer (1) which on the one hand fixes the duty ratio, or conduction angle, of the breaker switch (S₁) of the first stage at a constant value so that the high voltage (Vₐ) at the output of the first stage is itself constant and on the other hand varies the duty ratio, or conduction angle, of the breaker switch (S₂) of the second stage, thereby varying the energy stored up in the inductor (L₂) and consequently the excitation voltage of the injectors.

9. Method of implementation according to Claim 7, **characterized in that** it comprises moreover a sequence for driving the excitation voltage (Vpᵢ) across the terminals of the injectors (Pᵢ), by the electronic control computer (1) which on the one hand fixes the duty ratio, or conduction angle, of the breaker switch (S₂) of the second stage at a constant value and on the other hand varies the duty ratio, or conduction angle, of the breaker switch of the first stage (S₁) so that the high voltage (Vₐ) at the output of the first stage is adjustable and constitutes the driving parameter for the excitation voltage (Vₚᵢ) of the injectors.

10. Method of implementation according to Claim 7, **characterized in that** it comprises an additional step of ordering the closing of the breaker switch (S₂) of the second stage for generating a supply current source for the injectors, when the voltage measured across its terminals is zero, that is to say when the excitation voltage (Vₚᵢ) of the injectors is zero.

11. Method of implementation according to Claim 10, **characterized in that** the additional step of ordering the closing of the breaker switch (S₂) of the second stage is carried out by analogue control means, such as a transistor (Tₜₕᵣₑₛₕ), of PNP type in the case where the switch (S₂) is a transistor of NPN type, receiving a control signal (U_{com}) from the control computer (1) on its emitter and whose base receives the voltage existing across the terminals of the switch (S₂), in the following manner: if the discrepancy between the control voltage and the measured voltage is less than a determined threshold, the transistor (Tₜₕᵣₑₛₕ) conducts and allows the closing control signal to pass through its collector which is linked to the base of the switch (S₂), by way of a resistor (R).

## Patentansprüche

1. Steuervorrichtung mindestens eines piezoelektrischen Ultraschallaktors, der elektronisch ausgehend von einem Kontrollrechner und von einer Gleichspannungsquelle gesteuert wird, mit:
- einer ersten von der Gleichspannungsquelle gespeisten Verstärkungsstufe der Spannung, um eine Hochspannung zu erzeugen;
- einer zweiten mit der von der ersten Stufe erzeugten Hochspannung gespeisten Stufe zur Erzeugung einer Stromquelle, um Injektoren zu speisen;
- einer dritten Stufe zur Auswahl der zu steuernden piezoelektrischen Injektoren;
- einer vierten Stufe zum Steuern der Erregerspannung der Injektoren;
**dadurch gekennzeichnet, dass** die zweite Stufe zur Erzeugung einer Stromquelle (i₂), um die piezoelektrischen Injektoren zu speisen, aus einem Zweig besteht, der eine zweite Drosselspule (L₂) enthält, die mit einem getakteten Schalter verbunden ist, der mit einer Freilaufdiode (d₂) antiparallel geschaltet ist, wobei die Drosselspule (L₂) eines bestimmten Werts, um einen Schwingkreis mit jedem gesteuerten Injektor herzustellen, einerseits mit dem Verbindungspunkt (J₂) einer Diode (D) mit einem Filterkondensator (C) der ersten Stufe und andererseits mit einer Klemme des Schalters (S₂) verbunden ist, dessen andere Klemme mit der Klemme (-) der Spannungsquelle (B) verbunden ist.

2. Steuervorrichtung nach Anspruch 1, **dadurch gekennzeichnet, dass** der Wert der Drosselspule (L₂) der zweiten Stufe zur Erzeugung einer Stromquelle (i₂), um die piezoelektrischen Injektoren zu speisen, von der akustischen Erregungsresonanz der piezoelektrischen Aktoren abhängt und so bestimmt wird, dass die Drosselspule (L₂) die Zeit hat, sich in einer ersten Phase ausreichend aufzuladen, damit die Erregerspannung (Vpᵢ) an den Klemmen des Injektors Pᵢ, nahe 1200 Volt, erreicht wird.

3. Steuervorrichtung nach einem der Ansprüche 1 oder 2, **dadurch gekennzeichnet, dass** die erste Stufe der Erzeugung einer Hochspannung (Vₐ) besteht aus:
- einen ersten Zweig, der eine erste Drosselspule (L₁) enthält, die mit einem getakteten Schalter (S₁) verbunden ist, der mit einer Freilaufdiode (d₁) antiparallel geschaltet ist, wobei die Drosselspule (L₁) auf der einen Seite mit der Klemme (+) der Gleichspannungsquelle (B) und auf der anderen Seite mit einer Klemme des Schalters *(S₁)* verbunden ist, dessen andere Klemme an die Klemme (-) de der Quelle (B) und/oder an Masse angeschlossen ist;
- einen zweiten Zweig, der mit dem getakteten Schalter (S₁) parallelgeschaltet ist und eine Diode (D) aufweist, die mit einem Filterkondensator (C) verbunden ist, wobei eine der Klemmen der Diode (D) mit dem Verbindungspunkt (J₁) der Drosselspule (L₁) und des Schalters (S₁) des ersten Zweigs verbunden ist, wobei die Speise-Hochspannung an den Klemmen des Kondensators (C) geliefert wird.

4. Steuervorrichtung nach einem der Ansprüche 1 oder 2, **dadurch gekennzeichnet, dass** die erste Stufe zur Erzeugung einer Speise-Hochspannung (Vₐ) besteht aus:
- einem ersten Zweig, der eine erste Drosselspule (L₁) enthält, die mit einem getakteten Schalter (S₁) verbunden ist, der mit einer Freilaufdiode (d₁) antiparallel geschaltet ist, wobei die Drosselspule (L₁) auf der einen Seite mit der Klemme (+) der Gleichspannungsquelle (B) und auf der anderen Seite mit einer Klemme des Schalters (S₁) verbunden ist, dessen andere Klemme an die Klemme (-) der Quelle (B) und/oder an Masse angeschlossen ist;
- einen zweiten Zweig, der mit der Drosselspule (L₁) parallelgeschaltet ist und einen Filterkondensator (C) in Reihe mit einer Diode (D) enthält, wobei die Speise-Hochspannung (Vₐ) zwischen der Klemme (-) der Spannungsquelle (B) und dem Verbindungspunkt (J₃) des Kondensators (C) mit der Diode (D) geliefert wird.

5. Steuervorrichtung nach den Ansprüchen 1 bis 4, **dadurch gekennzeichnet, dass** die vierte Steuerstufe der Erregerspannung (Vₚᵢ) der Injektoren aus dem elektronischen Kontrollrechner (1) besteht, der diesen Erregerspannungs-Sollwert in einen Hochspannungs-Sollwert (V_{acons}) umwandelt, mit dem die von einem Sensor (2) gemessene Hochspannung (Vₐ) verglichen wird, die so von einem Regler (3) vom Typ Proportional Integral Abgeleitet geregelt wird, wobei die Abweichung (ε) zwischen dem gemessenen Wert und dem Sollwert in ein Öffnungs-Steuersignal (τₛ₁) des getakteten Schalters (S₁) umgewandelt wird, das es ermöglicht, die Hochspannung Vₐ herzustellen, die für den Erhalt der Erregerspannung notwendig ist.

6. Steuervorrichtung nach den Ansprüchen 1 bis 4, **dadurch gekennzeichnet, dass** die vierte Steuerstufe der Erregerspannung (Vₚᵢ) der Injektoren aus dem elektronischen Kontrollrechner (1) besteht, der diesen Erregerspannungs-Sollwert in einen Hochspannungs-Sollwert (V_{acons}) umwandelt, der durch Kalibrierung abhängig von den verwendeten Injektoren erhalten wird.

7. Verfahren zur Anwendung der Steuervorrichtung mindestens eines piezoelektrischen Ultraschallaktors nach den Ansprüchen 1 bis 6, **dadurch gekennzeichnet, dass** es eine Sequenz der Auswahl eines gegebenen Aktors (Pᵢ) durch Steuerung des Schließens der mit dem Aktor über den Kontrollrechner verbundenen Auswahleinrichtungen aufweist, und dass es ebenfalls mindestens eine Sequenz der Speisung des ausgewählten Aktors mit Wechselhochspannung aufweist, die aufweist:
- in einer ersten Phase des Ladens der Drosselspule (L₂) der zweiten Stufe der Vorrichtung das Schließen des getakteten Schalters (S₂) durch den Kontrollrechner (1), damit die von der Hochspannung (Vₐ) kommende Energie sich in der Drosselspule (L₂) durch Fließen eines Stroms (i₂) in der Schleife sammelt, die aus dem Filterkondensator (C), der Drosselspule (L₂) und dem Schalter (S₂) besteht;
- und in einer zweiten Phase der Schwingung zwischen dem Aktor und der Drosselspule (L₂) das Öffnen des getakteten Schalters (S₂) durch den Kontrollrechner (1), wobei die antiparallel geschaltete, nicht leitende Diode (d₂) den Strom (i₂) zwingt, aufgrund der elektrischen Resonanz zwischen der Drosselspule (L₂) und dem Injektor (Pᵢ) im Aktor (Pᵢ) in der einen Richtung und dann in der anderen zu fließen;
und mindestens eine Sequenz des Entladens der Drosselspule (L₂) aufweist, während die Spannung (Vₚᵢ) an ihren Klemmen Null ist, was einen Energietransfer vom Injektor zur Drosselspule (L₂) bewirkt, der einen negativen Strom (i₂) in der die Drosselspule (L₂), den Filterkondensator (C) und die antiparallel geschaltete Diode (d₂) enthaltenden Schleife erzeugt.

8. Anwendungsverfahren nach Anspruch 7, **dadurch gekennzeichnet, dass** es zusätzlich eine Sequenz der Steuerung der Erregerspannung (Vₚᵢ) an den Klemmen der Injektoren (Pᵢ) durch den elektronischen Kontrollrechner (1) aufweist, der einerseits das zyklische Verhältnis oder den Stromflusswinkel des getakteten Schalters (S₁) der ersten Stufe auf einem konstanten Wert festlegt, damit die Hochspannung (Vₐ) am Ausgang der ersten Stufe selbst konstant ist, und andererseits das zyklische Verhältnis oder den Stromflusswinkel des getakteten Schalters (S₂) der zweiten Stufe variieren lässt, was die in der Drosselspule (L₂) gespeicherte Energie und folglich die Erregerspannung der Injektoren variieren lässt.

9. Anwendungsverfahren nach Anspruch 7, **dadurch gekennzeichnet, dass** es zusätzlich eine Sequenz der Steuerung der Erregerspannung (Vₚᵢ) an den Klemmen der Injektoren (Pᵢ) durch den elektronischen Kontrollrechner (1) aufweist, der einerseits das zyklische Verhältnis oder den Stromflusswinkel des getakteten Schalters (S₂) der zweiten Stufe auf einem konstanten Wert festlegt und andererseits das zyklische Verhältnis oder den Stromflusswinkel des getakteten Schalters (S₁) der ersten Stufe variieren lässt, damit die Hochspannung (Vₐ) am Ausgang der ersten Stufe regelbar ist und den Steuerparameter der Erregerspannung (Vₚᵢ) der Injektoren bildet.

10. Anwendungsverfahren nach Anspruch 7, **dadurch gekennzeichnet, dass** es einen zusätzlichen Schritt der Schließsteuerung des getakteten Schalters (S₂) der zweiten Stufe zur Erzeugung einer Stromquelle zur Speisung der Injektoren aufweist, wenn die an ihren Klemmen gemessene Spannung Null ist, d.h. wenn die Erregerspannung (Vₚᵢ) der Injektoren Null ist.

11. Anwendungsverfahren nach Anspruch 10, **dadurch gekennzeichnet, dass** der zusätzliche Schritt der Schließsteuerung des getakteten Schalters (S₂) der zweiten Stufe von analogen Steuereinrichtungen, wie einem Transistor (T_{Schwelle}), vom Typ PNP, wenn der Schalter (S₂) ein Transistor vom Typ NPN ist, der ein Steuersignal (U_{com}) von Kontrollrechner (1) an seinem Emitter empfängt und dessen Basis die an den Klemmen des Schalters (S₂) vorhandene Spannung empfängt, folgendermaßen durchgeführt wird: Wenn die Abweichung zwischen der Steuerspannung und der gemessenen Spannung geringer als eine bestimmte Schwelle ist, ist der Transistor (T_{Schwelle}) leitend und lässt das Schließsteuersignal durch seinen Kollektor, der mit der Basis des Schalters (S₂) verbunden ist, über einen Widerstand (R) gehen.
